# EUROPEAN PATENT APPLICATION

(11) **EP 4 783 400 A1**
(43) Date of publication of application: **29.07.2026**
(21) Application number: 23952894.6
(22) Date of filing: 30.11.2023
(51) Int. Cl.: H02J 3/32, H02J 3/01, H02J 7/00

(54) **POWER CONVERSION SYSTEM AND CONTROL METHOD THEREFOR**

(30) Priority: 22.09.2023 CN 202311237145
(71) Applicant: Sungrow Power Supply Co., Ltd., Hefei, Anhui 230088 (CN)
(72) Inventor: WU, Ziheng, Hefei, Anhui 230088 (CN); ZHANG, Jin, Hefei, Anhui 230088 (CN); ZHAO, Renming, Hefei, Anhui 230088 (CN)
(74) Representative: Epping - Hermann - Fischer
(86) International application number: PCT/CN2023/135283
(87) International publication number: WO 2025/060250

(57) **Abstract**

The present application provides a power conversion system and a control method therefor. According to the control method, upon receipt of a zero-power operation instruction, an alternating-current grid connection switch on the alternating-current side of each power unit in a power conversion system is controlled to be kept closed, and the power units are controlled to respectively operate in a charging mode and a discharging mode, wherein the total charging power and the total discharging power of the power units satisfy a zero-power grid connection requirement. In this way, operation in a zero-power mode can be implemented, and all power units are enabled to generate waves, thereby avoiding problems such as burnout of an alternating-current capacitor that would easily occur due to wave blocking, avoiding the risk of system resonance, and enhancing system stability. Moreover, the zero-power mode of the power conversion system can be implemented without increasing any hardware cost, and the demand of power grid scheduling is satisfied.

## Description

This application claims priority to Chinese Patent Application No. 202311237145.9 titled "POWER CONVERSION SYSTEM AND CONTROL METHOD THEREFOR", filed on September 22, 2023 with the China National Intellectual Property Administration, which is incorporated herein by reference in its entirety.

### FIELD

This present disclosure relates to the technical field of energy storage, and in particular to a power conversion system and a method for controlling the power conversion system.

### BACKGROUND

In order to meet a requirement of rapid dispatch for a power grid, a power conversion system in an energy storage power station is usually required to be in a zero-power mode. In the zero-power mode, the power conversion system does not output power externally, and an alternating-current grid-connected switch of the power conversion system is not disconnected from the power grid.

A conventional implementation method involves blocking a PWM (Pulse Width Modulation) signal of the power conversion system and maintaining the alternating-current grid-connected switch in a turned-on state. With this method, the power conversion system across the entire station can output zero power. However, since an alternating-current capacitor is connected to the power grid, with consideration of an influence of an impedance of the power grid and potential low-order harmonics in the power grid, alternating-current capacitance and the impedance of the power grid are prone to cause low-frequency resonance, which in turn results in situations such as burnout of the alternating-current capacitor.

### SUMMARY

A power conversion system and a method for controlling the power conversion system are provided according to the present disclosure to address issues such as burnout of an alternating-current capacitor which are prone to occur during pulse blocking.

The following technical solutions are provided according to the present disclosure.

In a first aspect of the present disclosure, a method for controlling a power conversion system is provided. The power conversion system includes: at least two power units, where direct-current sides of the at least two power units are connected to respective battery units, and alternating-current sides of at least two power units are connected to a power grid through respective alternating-current grid-connected switches. The method for controlling a power conversion system includes:
determining whether a zero-power operation command is received;
controlling, upon receiving the zero-power operation command, the respective alternating-current grid-connected switches to be in a turned-on state; and
controlling the at least two power units to operate in a charging mode or a discharging mode respectively, where a total charging power and a total discharging power of the at least two power units satisfy a zero-power grid-connection requirement.

In an embodiment, the controlling the at least two power units to operate in the charging mode or the discharging mode respectively includes:
controlling at least one of the at least two power units to operate in the charging mode; and
controlling the other power units to operate in the discharging mode.

In an embodiment, the zero-power grid-connection requirement is that a difference between an absolute value of the total charging power and an absolute value of the total discharging power is less than or equal to a power threshold of the zero-power operation command.

In an embodiment, the zero-power grid-connection requirement is that an absolute value of the total charging power is equal to an absolute value of the total discharging power.

In an embodiment, after controlling the at least two power units to operate in the charging mode or the discharging mode respectively, the method further includes:
determining whether a state of charge, SOC, of the battery unit connected to the power unit operating in the charging mode is greater than or equal to a preset upper limit, and determining whether an SOC of the battery unit connected to the power unit operating in the discharging mode is less than or equal to a preset lower limit;
in response to the SOC of the battery unit connected to the power unit operating in the charging mode being greater than or equal to the preset upper limit, or in response to the SOC of the battery unit connected to the power unit operating in the discharging mode being less than or equal to the preset lower limit, swapping the charging mode and the discharging mode of the at least two power units.

In an embodiment, the swapping the charging mode and the discharging mode of the at least two power units includes:
controlling the power unit operating in the charging mode to operate in the discharging mode; and,
controlling the power unit operating in the discharging mode to operate in the charging mode.

In an embodiment, the determining whether the SOC of the battery unit connected to the power unit operating in the charging mode is greater than or equal to the preset upper limit includes: determining whether a maximum SOC among the SOCs of the battery units connected to the power units operating in the charging mode is greater than or equal to the preset upper limit; and the determining whether the SOC of the battery unit connected to the power unit operating in the discharging mode is less than or equal to the preset lower limit comprises: determining whether a minimum SOC among the SOCs of the battery units connected to the power units operating in the discharging mode is less than or equal to the preset lower limit.

In an embodiment, after determining whether the SOC of the battery unit connected to the power unit operating in the charging mode is greater than or equal to the preset upper limit, and determining whether the SOC of the battery unit connected to the power unit operating in the discharging mode is less than or equal to the preset lower limit, the method further includes:
in response to the SOC of the battery unit connected to the power unit operating in the charging mode being less than the preset upper limit, and the SOC of the battery unit connected to the power unit operating in the discharging mode being greater than the preset lower limit, maintaining the at least two power units in the current respective charging mode or discharging mode.

In an embodiment, after swapping the charging mode and the discharging mode of the at least two power units, the method further includes:
determining again whether the SOC of the battery unit connected to the power unit operating in the charging mode is greater than or equal to the preset upper limit, and whether the SOC of the battery unit connected to the power unit operating in the discharging mode is less than or equal to the preset lower limit;
in response to the SOC of the battery unit connected to the power unit operating in the charging mode being greater than or equal to the preset upper limit, or in response to the SOC of the battery unit connected to the power unit operating in the discharging mode being less than or equal to the preset lower limit, swapping the charging mode and the discharging mode of the at least two power units again; and
in response to the SOC of the battery unit connected to the power unit operating in the charging mode being less than the preset upper limit, and the SOC of the battery unit connected to the power unit operating in the discharging mode being greater than the preset lower limit, maintaining the at least two power units in the current respective charging mode or discharging mode.

In a second aspect of the present disclosure, a power conversion system is provided, and includes a controller and at least two power units, where
direct-current sides of the at least two power units are connected to respective battery units;
alternating-current sides of the at least two power units are connected to a power grid through respective alternating-current grid-connected switches; and
each of the at least power units is controlled by the controller, and the controller is configured to perform the method for controlling a power conversion system according to any one of the first aspect described above.

In an embodiment, the power unit is a bidirectional DC/AC conversion circuit.

In an embodiment, the battery unit includes one battery cluster, or at least two battery clusters connected in parallel.

With the method for controlling a power conversion system according to the present disclosure, in response to the zero-power operation command, all alternating-current grid-connected switches at alternating sides of the power units in the power conversion system are controlled to be in a turned-on state; and the power units are controlled to operate in a charging mode or a discharging mode respectively, where a total charging power and a total discharging power of all the power units satisfy a zero-power grid-connection requirement. Therefore, operation in a zero-power mode and pulse output to all power units can be implemented, thereby addressing issues such as burnout of an alternating-current capacitor that are prone to occur during pulse blocking.

### BRIEF DESCRIPTION OF THE DRAWINGS

In order to more clearly illustrate technical solutions in embodiments of the present disclosure or in the conventional technology, drawings to be used in the description of the embodiments or the conventional technology are briefly described below. Apparently, the drawings in the following description show only some embodiments of the present disclosure, and other drawings may be obtained by those skilled in the art from the drawings without any creative work.
FIG. 1 is a schematic structural diagram of a power conversion system according to an embodiment of the present disclosure;
FIG. 2 is a flowchart of a method for controlling a power conversion system according to an embodiment of the present disclosure;
FIG. 3 is a flowchart of a method for controlling a power conversion system according to another embodiment of the present disclosure;
FIG. 4 is a flowchart of a method for controlling a power conversion system according to another embodiment of the present disclosure; and
FIG. 5 is a schematic diagram of part of operating logic of the method for controlling a power conversion system according to an embodiment of the present disclosure.

### DETAILED DESCRIPTION

The technical solutions according to the embodiments of the present disclosure will be described clearly and completely as follows in conjunction with the drawings in the embodiments of the present disclosure. Obviously, the described embodiments are only some rather than all of the embodiments of the present disclosure. All other embodiments obtained by those skilled in the art based on the embodiments of the present disclosure without any creative work fall within the protection scope of the present disclosure.

The terms "include", "comprise" or any other variations are intended to cover non-exclusive "include", thus a process, a method, an object or a device including a series of factors not only include the listed factors, but also include other factors not explicitly listed, or also include inherent factors of the process, the method, the object or the device. Unless expressly limited otherwise, the phrase "comprising (including) a/an..." does not exclude existence of other similar elements in the process, method, article or device including the elements.

A method for controlling a power conversion system is provided according to the present disclosure, to address issues such as burnout of an alternating-current capacitor which are prone to occur during pulse blocking.

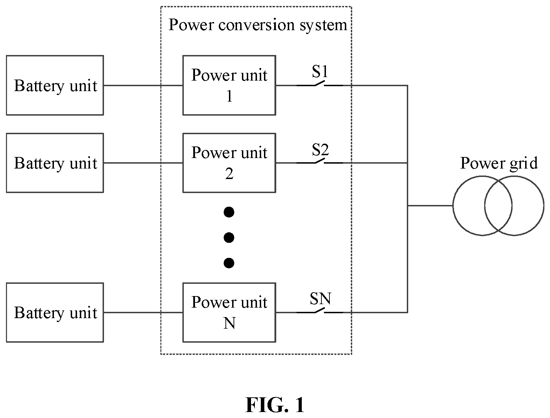

Referring to FIG. 1, the power conversion system includes at least two power units (such as a power unit 1 to a power unit N shown in the figure). Direct-current sides of the at least two power units are connected to respective battery units. The battery unit may include one battery cluster or at least two battery clusters connected in parallel. The battery cluster includes one battery pack or at least two battery packs connected in series. Alternating-current sides of the at least two power units are connected to a power grid through respective alternating-current grid-connected switches (such as S1 to SN shown in the figure). N is an integer greater than 1.

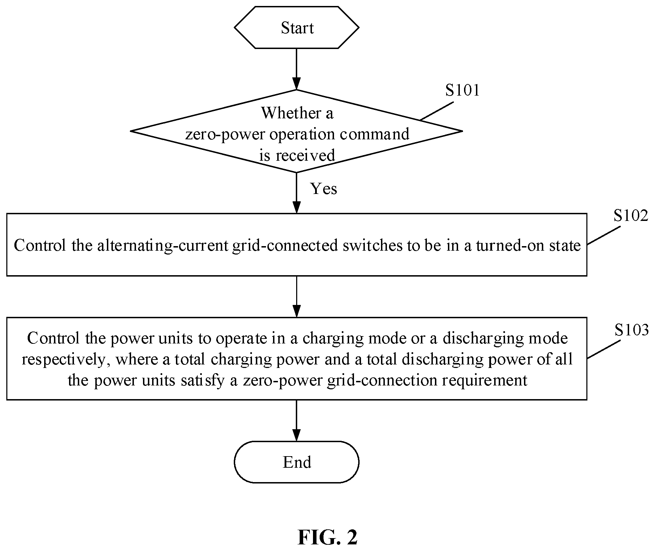

Referring to FIG. 2, the method for controlling a power conversion system includes the following step S101 to step S103.

In step S101, it is determined whether a zero-power operation command is received.

The zero-power operation command is a dispatch command sent by an upper computer to the power conversion system, and is used to control the power conversion system to operate in a zero-power mode, that is, the power conversion system does not output power externally, and none of all alternating-current grid-connected switches are disconnected from the power grid.

Upon receiving the zero-power operation command, step S102 and step S103 are performed. In practical applications, step S102 and step S103 may be performed simultaneously. Alternatively, step S102 may be executed first, followed by step S103, which depends on a specific application environment. All implementations fall within the protection scope of the present disclosure.

In step S102, all alternating-current grid-connected switches are controlled to be in a turned-on state.

If all alternating-current grid-connected switches are in a turned-off at a previous time instant, step S102 involves turning on the alternating-current grid-connected switches. If all alternating-current grid-connected switches are in a turned-on state at a previous time instant, step S102 involves maintaining the alternating-current grid-connected switches in the turned-on state.

In practical applications, it is also possible that some alternating-current grid-connected switches are in a turned-off state while the other alternating-current grid-connected switches are in a turned-on state. Upon receiving the zero-power operation command at this time instant, S102 involves turning on some alternating-current grid-connected switches in the turned-off state, and maintaining the turned-on state of the other alternating-current grid-connected switches.

In step S103, the power units are controlled to operate in a charging mode or a discharging mode respectively, where a total charging power and a total discharging power of all the power units satisfy a zero-power grid-connection requirement.

The process of controlling the power units to operate in a charging mode or a discharging mode respectively may be controlling at least one of the power units to operate in the charging mode; and controlling the other power units to operate in the discharging mode. For the power conversion system shown in FIG. 1, the process may be controlling N1 power units to operate in the discharging mode; and controlling N2 power units to operate in the charging mode; where N=N1+N2, thereby ensuring that all power units require pulse control and are not in a pulse blocking state.

Furthermore, the total discharging power outputted by the N1 power units operating in the discharging mode is represented by P1; and the total charging power received by the N2 power units operating in the charging mode is represented by P2. A duty cycle of a pulse outputted to each of the power units is regulated, to make P1 and P2 satisfy the zero-power grid-connection requirement, preventing the power conversion system from being disconnected from the power grid due to failing to satisfy the zero-power grid-connection requirement. In practical applications, the zero-power grid-connection requirement may be that a difference between an absolute value of the total charging power and an absolute value of the total discharging power is less than or equal to a power threshold of the zero-power operation command, that is, |P1|-|P2|<Pmin. Pmin is the power threshold, and a value of the Pmin may be determined based on an actual situation, for example, the Pmin may be a positive value slightly greater than zero. Additional, the duty cycle of the pulse outputted to each of the power units may be directly regulated, to achieve |P1|=|P2|, ensuring that the output power of the power conversion system at a port of the power grid is zero.

The method for controlling a power conversion system according to the embodiment can achieve operation in a zero-power mode and pulse output to all power units based on the above principle, addressing issues such as burnout of an alternating-current capacitor which are prone to occur during pulse blocking, avoiding a risk of system resonance, and improving system stability. Moreover, the zero-power mode of the power conversion system can be implemented without increasing any hardware cost, satisfying the dispatch demand of the power grid.

It should be noted that another implementation in the related art is to control each of the power units to discharge at a very low power, and maintain the alternating-current grid-connected switches in the turned-on state. However, in practical applications, due to an influence of zero drift, temperature drift, and accuracy of a sensor, a power unit may be controlled to output a high power. In a case of a large number of converters in a whole station, the total output power may exceed the dispatch demand, resulting in disconnection from the power grid due to failure to satisfy a condition.

With the method for controlling a power conversion system according to the embodiment, some of the power units are controlled to discharge while the other power units are controlled to be charged, thereby ensuring charging-discharging matching through the adjustment of these two modes, so that the output power of the power conversion system at the port of the power grid satisfies the requirement.

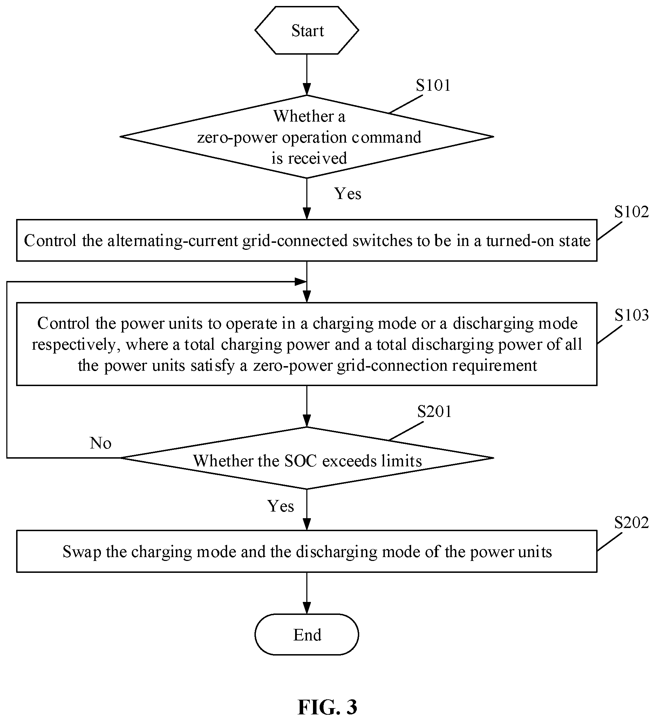

Based on the previous embodiment, some more preferred examples are given for the method for controlling a power conversion system in the embodiment. For example, referring to FIG. 3, after step S103, the method further includes step S201 to step S203.

In step S201, whether a state of charge (SOC) of a battery unit connected to the power unit operating in the charging mode is greater than or equal to a preset upper limit, and whether an SOC of a battery unit connected to the power unit operating in the discharging mode is less than or equal to a preset lower limit are determined.

Whether the SOC exceeds the limits is determined in step S201. In practical applications, the determining whether a state of charge (SOC) of a battery unit connected to the power unit operating in the charging mode is greater than or equal to a preset upper limit includes: determining whether a maximum SOC among the SOCs of the battery units connected to the power units operating in the charging mode is greater than or equal to the preset upper limit. Similarly, the determining whether the SOC of a battery unit connected to the power unit operating in the discharging mode is less than or equal to a preset lower limit includes: determining whether a minimum SOC among the SOCs of the battery units connected to the power units operating in the discharging mode is less than or equal to the preset lower limit.

Alternatively, an average value of the SOCs of the battery units connected to the power units in an identical mode may be calculated, and then this average value may be compared with the preset upper limit or the preset lower limit for determination, which depends on specific application environments and is not limited here.

In response to the SOC of the battery unit connected to the power unit operating in the charging mode being greater than or equal to the preset upper limit, or in response to the SOC of the battery unit connected to the power unit operating in the discharging mode is less than or equal to the preset lower limit, step S202 is performed.

In step S202, the charging mode and the discharging mode of the power units are swapped.

Step S202 includes controlling the power unit operating in the charging mode to operate in the discharging mode; and controlling the power unit operating in the discharging mode to operate in the charging mode. For the structure shown in FIG. 1, in this step, the above-described N1 power units are switched to the charging mode, and the above-described N2 power units are switched to the discharging mode.

In response to the SOC of the battery unit connected to the power unit operating in the charging mode being less than the preset upper limit, and the SOC of the battery unit connected to the power unit operating in the discharging mode being greater than the preset lower limit, the power units are maintained in the respective charging mode or discharging mode, that is, returning to the mode control of each of the power units in step S103. For the structure shown in FIG. 1, in this step, the above-described N1 power units are maintained in the discharging mode, and the above-described N2 power units are maintained in the charging mode.

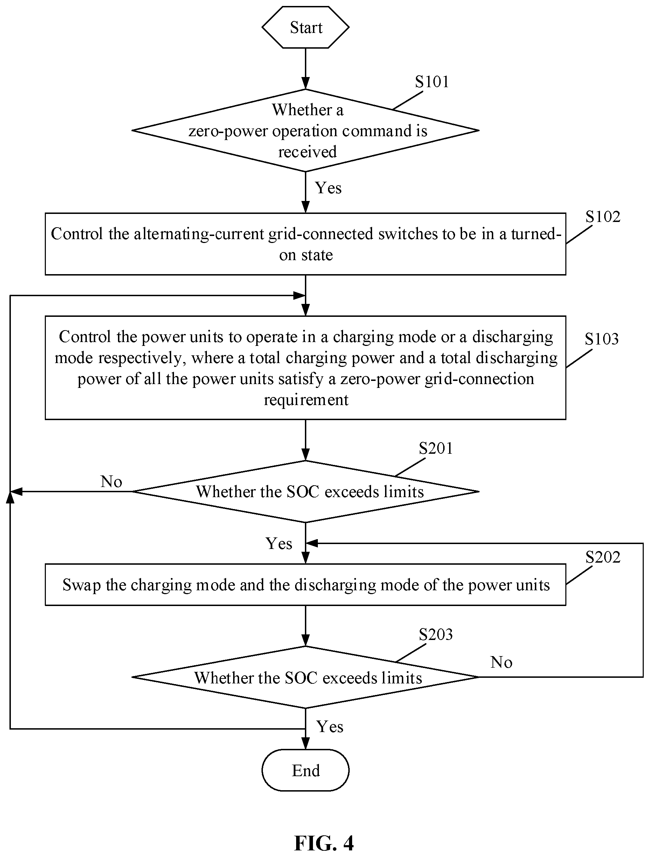

Additionally, referring to FIG. 4, after step S202 of swapping the charging mode and the discharging mode of the power units, the method further includes step S203.

In step S203, whether the SOC of the battery unit connected to the power unit operating in the charging mode is greater than or equal to the preset upper limit, and whether the SOC of the battery unit connected to the power unit operating in discharging mode is less than or equal to the preset lower limit are determined again.

In the step S203, whether the SOC exceeds the limits is determined again. At this time, in response to the SOC of the battery unit connected to the power unit operating in the charging mode being greater than or equal to the preset upper limit, or in response to the SOC of the battery unit connected to the power unit operating in the discharging mode being less than or equal to the preset lower limit, the charging mode and the discharging mode of the power units are swapped again, that is, returning to the mode control of each of the power units in step S103. For the structure shown in FIG. 1, in this step, the above-described N1 power units are controlled to operate again in the discharging mode, and the above-described N2 power units are controlled to operate again in the charging mode.

In response to the SOC of the battery unit connected to the power unit operating in the charging mode being less than the preset upper limit, and the SOC of the battery unit connected to the power unit operating in the discharging mode being greater than the preset lower limit, the power units are maintained in current respective charging mode or discharging mode, that is, returning to the mode control of each of the power units in step S202. For the structure shown in FIG. 1, in this step, the above-described N1 power units are maintained in the charging mode, and the above-described N2 power units are maintained in the discharging mode.

For example, for the structure shown in FIG. 1, a complete exemplary description for the control method is given as follows.

In response to a power station dispatch issues a zero-power operation command, N1 power units are controlled to operate in the discharging mode, with a total discharging power of P1. A minimum value or an average value of SOCs of battery units corresponding to the power units is represented by SOC1, and SOC3 is the preset lower limit, where SOC3≤SOC1. The other N2 power units are controlled to operate in the charging mode, with a total charging power represented by P2. A maximum value or an average value of SOCs of battery units corresponding to the power units is represented by SOC2, and SOC4 is the preset upper limit, where SOC2≤SOC4.

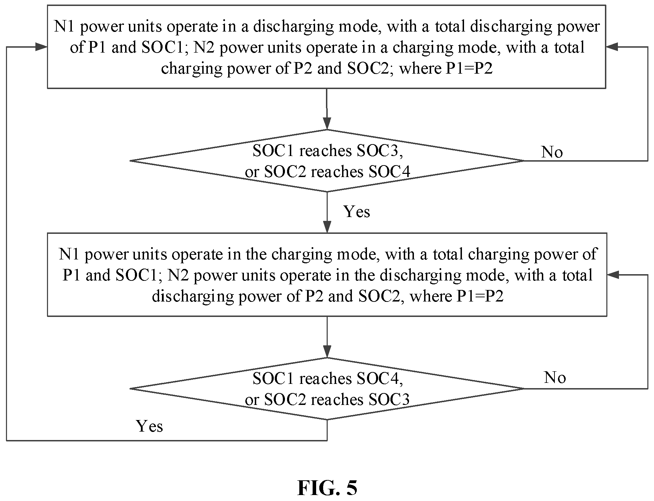

As the discharging duration increases, SOC1 gradually decreases. When SOC1 reaches the preset lower limit SOC3, it indicates that the N1 power units have low charge and are no longer suitable for discharging. Similarly, as the charging duration increases, SOC2 gradually increases. When SOC2 reaches the preset upper limit SOC4, it indicates that the N2 power units have high charge and are no longer suitable for being charged. Therefore, when SOC1 reaches the preset lower limit SOC3 or SOC2 reaches the preset upper limit SOC4, the N1 power units are controlled to operate in the charging mode, and the N2 power units are controlled to operate in the discharging mode. Then, the corresponding SOCs continue to be monitored and compared, and this process repeats. An operating logic may be referred to in FIG. 5. On condition that N=N1+N2 and P1=P2, the output power of the power conversion system at the port of the power grid may be zero in a real time manner.

A power conversion system is provided according to another embodiment of the present disclosure, as shown in FIG. 1, and the power conversion system includes a controller (not shown in the figure) and at least two power units (such as power unit 1 to power unit N shown in the figure), where N is an integer greater than 1.

Direct-current sides of the at least two power units are connected to respective battery units. The battery unit may include one battery cluster or at least two battery clusters connected in parallel. The battery cluster includes one battery pack or at least two battery packs connected in series.

Alternating-current sides of the at least two power units are connected to a power grid through respective alternating-current grid-connected switches (S1 to SN as shown in the figure).

Each of the power units may be a bidirectional DC/AC conversion circuit, and may adopt any topology in the related art, which is not limited here and depends on an application environment, all of which fall within the protection scope of the present disclosure.

Each of the power units is controlled by the controller, and the controller is configured to perform the method for controlling a power conversion system as described in any of the above embodiments. Reference can be made to the foregoing embodiments for a specific process and principle of the method, which is not described herein in detail.

For the power conversion system according to the embodiment, by performing the above control method, the zero-power mode of the power conversion system can be implemented without increasing any hardware cost, satisfying the dispatch demand of the power grid, avoiding a risk of resonance of the system, and improving system stability.

The same and similar parts among the embodiments in the specification may be referred to each other. Each of the embodiments focuses on its differences from the other embodiments. In particular, the system or system embodiments is basically similar to the method embodiments, and therefore is described relatively briefly. For relevant details, reference can be made to the corresponding description of the method embodiments. The system and system embodiments described above are only schematic, in which the units described as separate components may or may not be physically separated, and the components shown as units may or may not be physical units, that is, the components may be located in one place or distributed at multiple network units. Some or all of the modules may be selected as needed to achieve the objective of the solution of the embodiments. Those skilled in the art may understand and implement the solution without any creative effort.

Those skilled in the art may further appreciate that the units and algorithmic steps in the examples described according to the embodiments disclosed herein may be implemented in forms of electronic hardware, computer software or a combination of the both. In order to illustrate the interchangeability of the hardware and the software clearly, the components and the steps in the examples are described generally according to functions in the above description. Whether these functions are performed in hardware or software depends on the specific application and design constraints for the technical solution. Those skilled in the art may implement the described function in various manners for each specific application, however such implementation should not be considered beyond the scope of the present disclosure.

On a basis of the disclosed embodiments, the features in different embodiments of the specification may be mutually replaced or combined, so that those skilled in the art can implement or utilize the present disclosure. Various modifications to these embodiments are apparent to those skilled in the art, and the general principles defined herein may be implemented in other embodiments without departing from the spirit or scope of the present disclosure. Therefore, the present disclosure is not to be limited to the embodiments shown herein, but is conformed to the widest scope consistent with the principles and novel features disclosed herein.

## Claims

1. A method for controlling a power conversion system, wherein the power conversion system comprises at least two power units, direct-current sides of the at least two power units are connected to respective battery units, and alternating-current sides of at least two power units are connected to a power grid through respective alternating-current grid-connected switches, **characterized in that** the method for controlling a power conversion system comprises:
determining whether a zero-power operation command is received;
controlling, upon receiving the zero-power operation command, the respective alternating-current grid-connected switches to be in a turned-on state; and
controlling the at least two power units to operate in a charging mode or a discharging mode respectively, wherein a total charging power and a total discharging power of the at least two power units satisfy a zero-power grid-connection requirement.

2. The method for controlling a power conversion system according to claim 1, the controlling the at least two power units to operate in the charging mode or the discharging mode respectively comprises:
controlling at least one of the at least two power units to operate in the charging mode; and
controlling the other power units to operate in the discharging mode.

3. The method for controlling a power conversion system according to claim 1, wherein the zero-power grid-connection requirement is that:
a difference between an absolute value of the total charging power and an absolute value of the total discharging power is less than or equal to a power threshold of the zero-power operation command.

4. The method for controlling a power conversion system according to claim 1, wherein the zero-power grid-connection requirement is that:
an absolute value of the total charging power is equal to an absolute value of the total discharging power.

5. The method for controlling a power conversion system according to any one of claims 1 to 4, wherein after controlling the at least two power units to operate in the charging mode or the discharging mode respectively, the method further comprises:
determining whether a state of charge, SOC, of the battery unit connected to the power unit operating in the charging mode is greater than or equal to a preset upper limit, and determining whether an SOC of the battery unit connected to the power unit operating in the discharging mode is less than or equal to a preset lower limit;
in response to the SOC of the battery unit connected to the power unit operating in the charging mode being greater than or equal to the preset upper limit, or in response to the SOC of the battery unit connected to the power unit operating in the discharging mode being less than or equal to the preset lower limit, swapping the charging mode and the discharging mode of the at least two power units.

6. The method for controlling a power conversion system according to claim 5, wherein the swapping the charging mode and the discharging mode of the at least two power units comprises:
controlling the power unit operating in the charging mode to operate in the discharging mode; and,
controlling the power unit operating in the discharging mode to operate in the charging mode.

7. The method for controlling a power conversion system according to claim 5, wherein
the determining whether the SOC of the battery unit connected to the power unit operating in the charging mode is greater than or equal to the preset upper limit comprises: determining whether a maximum SOC among the SOCs of the battery units connected to the power units operating in the charging mode is greater than or equal to the preset upper limit; and
the determining whether the SOC of the battery unit connected to the power unit operating in the discharging mode is less than or equal to the preset lower limit comprises: determining whether a minimum SOC among the SOCs of the battery units connected to the power units operating in the discharging mode is less than or equal to the preset lower limit.

8. The method for controlling a power conversion system according to claim 5, wherein after determining whether the SOC of the battery unit connected to the power unit operating in the charging mode is greater than or equal to the preset upper limit, and determining whether the SOC of the battery unit connected to the power unit operating in the discharging mode is less than or equal to the preset lower limit, the method further comprises:
in response to the SOC of the battery unit connected to the power unit operating in the charging mode being less than the preset upper limit, and the SOC of the battery unit connected to the power unit operating in the discharging mode being greater than the preset lower limit, maintaining the at least two power units in the current respective charging mode or discharging mode.

9. The method for controlling a power conversion system according to claim 5, wherein after swapping the charging mode and the discharging mode of the at least two power units, the method further comprises:
determining again whether the SOC of the battery unit connected to the power unit operating in the charging mode is greater than or equal to the preset upper limit, and whether the SOC of the battery unit connected to the power unit operating in the discharging mode is less than or equal to the preset lower limit;
in response to the SOC of the battery unit connected to the power unit operating in the charging mode being greater than or equal to the preset upper limit, or in response to the SOC of the battery unit connected to the power unit operating in the discharging mode being less than or equal to the preset lower limit, swapping the charging mode and the discharging mode of the at least two power units again; and
in response to the SOC of the battery unit connected to the power unit operating in the charging mode being less than the preset upper limit, and the SOC of the battery unit connected to the power unit operating in the discharging mode being greater than the preset lower limit, maintaining the at least two power units in the current respective charging mode or discharging mode.

10. A power conversion system, **characterized by** comprising: a controller and at least two power units; wherein
direct-current sides of the at least two power units are connected to respective battery units;
alternating-current sides of the at least two power units are connected to a power grid through respective alternating-current grid-connected switches; and
each of the at least power units is controlled by the controller, and the controller is configured to perform the method for controlling a power conversion system according to any one of claims 1 to 9.

11. The power conversion system according to claim 10, wherein the power unit is a bidirectional DC/AC conversion circuit.

12. The power conversion system according to claim 10, wherein the battery unit comprises one battery cluster, or at least two battery clusters connected in parallel.
